# EUROPEAN PATENT SPECIFICATION

(11) **EP 3 738 724 B1**
(45) Date of publication and mention of the grant of the patent: **26.10.2022**
(21) Application number: 19739060.2
(22) Date of filing: 09.01.2019
(51) Int. Cl.: G05D 1/00, G05D 1/02, A47L 9/00, A47L 9/28, H02J 7/00

(54) **MOBILE ROBOT AND METHOD FOR CONTROLLING MOBILE ROBOT**
MOBILER ROBOTER UND VERFAHREN ZUR STEUERUNG EINES MOBILEN ROBOTERS
ROBOT MOBILE ET PROCÉDÉ POUR COMMANDER UN ROBOT MOBILE

(30) Priority: 09.01.2018 KR 20180002980
(43) Date of publication of application: 18.11.2020
(73) Proprietor: LG Electronics Inc., 07336 SEOUL (KR)
(72) Inventor: BAEK, Seungmyun, Seoul 08592 (KR); PARK, Sangyeol, Seoul 08592 (KR); KIM, Hyunsung, Seoul 08592 (KR)
(74) Representative: Ter Meer Steinmeister & Partner
(86) International application number: PCT/KR2019/000331
(87) International publication number: WO 2019/139346

(56) References cited:
- WO-A2-2009/097354
- JP-A- 2003 125 998
- JP-A- 2006 164 100
- JP-A- 2006 164 100
- JP-A- 2007 122 327
- JP-A- 2015 066 342
- JP-A- 2016 202 647
- KR-A- 20080 060 535

## Description

### [Technical Field]

The present disclosure relates to a technique for controlling a function of a moving robot.

### [Background Art]

A robot has been developed for industrial use and has been in charge of a portion of a factory automation. In recent years, a field of application of the robot has been further expanded, and a medical robot, an aerospace robot, or the like has been developed, and a household robot which can be used in general home is also manufactured. Among the robots, a robot capable of autonomous-traveling is called a moving robot. A representative example of the moving robot used at home is a robot cleaner.

Various techniques for sensing an environment and a user around the moving robot are known through various sensors provided in the moving robot. In addition, a technique is known in which a moving robot learns and maps a traveling zone by itself and ascertains a current location on the map.

A technique in which a moving robot is implemented to perform certain operation such as cleaning. The moving robot generates a noise when performing a predetermined operation, and various noise blocking devices or noise reduction devices are known to reduce noise generation.

WO 2009/097354 A2 describes a service robot, such as a robotic cleaner, which can be configured to effectively service an environment. The service robot can include one or more sensors that sense its location, the location of objects, or both, and can also include noise reduction elements. The service robot can determine that it is under a "furnishing" and implement a different servicing pattern.

JP 2016 202647 A describes an electric rice cooker which includes: an electric heater; an input operation part capable of designating a reserved operation mode in which a rice cooking operation starts when predetermined time has come; a transmission part for transmitting a notification signal of rice cooking operation being complete and incomplete by radio or by cable with respect to the outside; a reception part for receiving an inquiry signal for a reserved rice cooking condition from the outside; and a control device for controlling the electric heater, and for detecting whether or not the operation by the reserved operation mode is complete.

JP 2006 164100 A describes a control method for a self-propelled mobile body that enables a self-propelled mobile body itself to reduce noise generated in travel and work according to the time zone of work by suppressing behavior as identifying the work time.

### [Disclosure]

### [Technical Problem]

A first object of the present disclosure is to reduce various disturbances such as a noise, light, and vibrations from a perspective of a user of a moving robot.

If a soundproofing device is added to reduce the noise of the moving robot, there is a problem in that a manufacturing cost of the moving robot increases. A second object of present disclosure is to solve this problem.

The second object of the present disclosure is to eliminate a disadvantage of limiting performance of a device caused by reducing the disturbance unnecessarily, while reducing the disturbance by a need of the user.

In order to reduce the disturbance, if an output or a speed of the operation of the moving robot decreases, there is a problem that efficiency of the operation performed by the moving robot is excessively reduced. A third object of present disclosure is to solve this problem.

In a specific situation such as a scheduled work or sleep of the user at a specific time, the disturbance of the moving robot causes large inconvenience to the user, and the user should manually reduce the output of the moving robot or turns off the traveling of the moving robot, which causes an inconvenience. A fourth object of present disclosure is to solve this problem.

### [Technical Solution]

In order to achieve the objects, the present disclosure suggest a disturbance prohibiting mode of a moving robot as a solution.

According to an aspect of the present disclosure, there is provided a control method of a moving robot including: a mode inputting step of receiving an input for information on a set time to set a predetermined disturbance prohibiting mode; and a disturbance prohibiting step of restricting at least one specific function when a current time belongs to the set time.

Information on a set zone may be provided to be input in the mode inputting step. When the information on the set zone is input in the mode inputting step, the at least one specific function may be prohibited only in the set zone of the traveling zones in the disturbance prohibiting step.

According to another aspect of the present disclosure, there is provided a moving robot including: a traveler which moves a main body; an operator which performs a predetermined operation; a communication module which receives information; and a controller which performs a control to restrict at least one specific function based on information on a set time received from the communication module when a current set included in the set time.

### [Advantageous Effects]

According to the solutions, it is possible to reduce a discomfort of a user due to a disturbance generated by a moving robot during an operation.

When the current time belongs to the set time, the specific function is restricted according to the disturbance prohibiting mode. Accordingly, the user can reduce the disturbance at a time when the user does not want to be disturbed, and it is possible to maximize operation efficiency of the moving robot when the prohibition is not required.

Whether or not the disturbance prohibiting step proceeds is changed by the determination of the controller. Accordingly, a need for the user to manually change the mode of the moving robot is reduced, and thus, the user can focus actions when the user sleeps, rests, or reads.

The at least one specific function is prohibited only in the set zone of the traveling zones. Accordingly, it is possible to reduce the disturbance a zone in which the user does not want to be disturbed, and it is possible to maximize the operation efficiency of the moving robot in a zone in which the disturbance prohibition is not necessary.

### [Description of Drawings]

FIG. 1 is a perspective view illustrating a moving robot 100 according to an embodiment of the present disclosure and a charging stand 200 for charging the moving robot.
FIG. 2 is an elevational view when the moving robot 100 of FIG. 1 is viewed from above.
FIG. 3 is an elevational view when the moving robot 100 of FIG. 1 is viewed from a front.
FIG. 4 is an elevational view when the moving robot 100 of FIG. 1 is viewed from below.
FIG. 5 is a block diagram illustrating a control relationship between main configurations of the moving robot 100 of FIG. 1.
FIG. 6 is a conceptual diagram illustrating a network between the moving robot 100 of FIG. 1 and a terminal 300.
FIG. 7 is a conceptual diagram illustrating an example of the network of FIG. 6.
FIG. 8 is a division conceptual diagram of a plurality of specific functions D73 according to an embodiment of the moving robot 100 of the present disclosure.
FIG. 9 is a division conceptual diagram of set information C70 of a disturbance prohibiting mode of the moving robot 100 of the present disclosure.
FIG. 10 is a flowchart illustrating a process in which a disturbance prohibiting step S300 or a normal performance step S400 start according to a control method of a moving robot of an embodiment of the present disclosure.
FIG. 11 is a flowchart illustrating a process of determining whether the disturbance prohibiting step S300 starts and ends.
FIG. 12 is a flowchart illustrating a process in which a disturbance prohibiting step S301 or a normal performance step S401 starts according to a first scenario of the present disclosure.
FIG. 13 is a flowchart showing a process in which a disturbance prohibiting step S302 or a normal performance step S402 starts according to a second scenario of the present disclosure.
FIG. 14 13 is a flowchart showing a process in which a disturbance prohibiting step S303 or a normal performance step S403 starts according to a third scenario of the present disclosure.
FIGS. 15 and 16 are diagrams illustrating a user environment according to an embodiment of the control method of present disclosure and illustrate the user environment for user input.

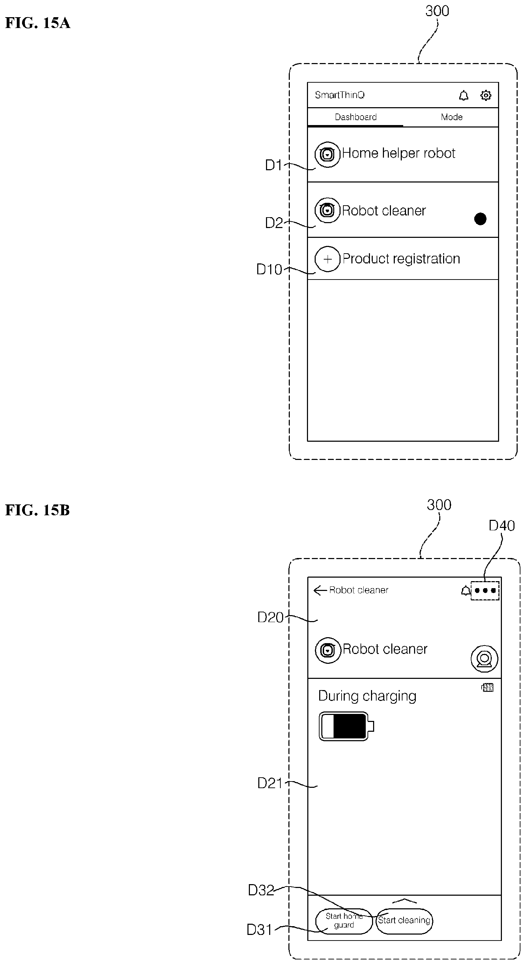

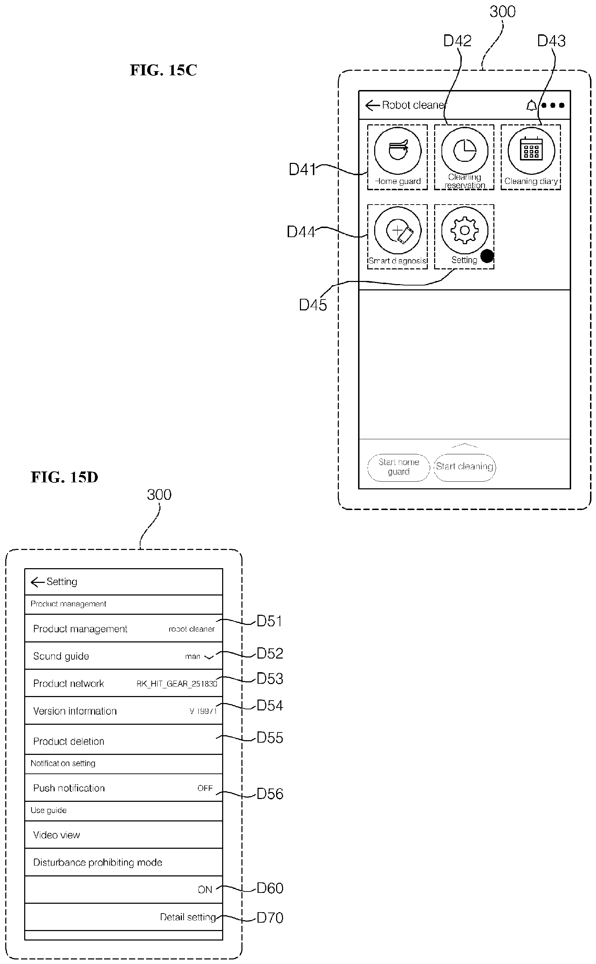

FIG. 15 is a diagram illustrating screens showing a process for entering a setting screen of the disturbance prohibiting mode.

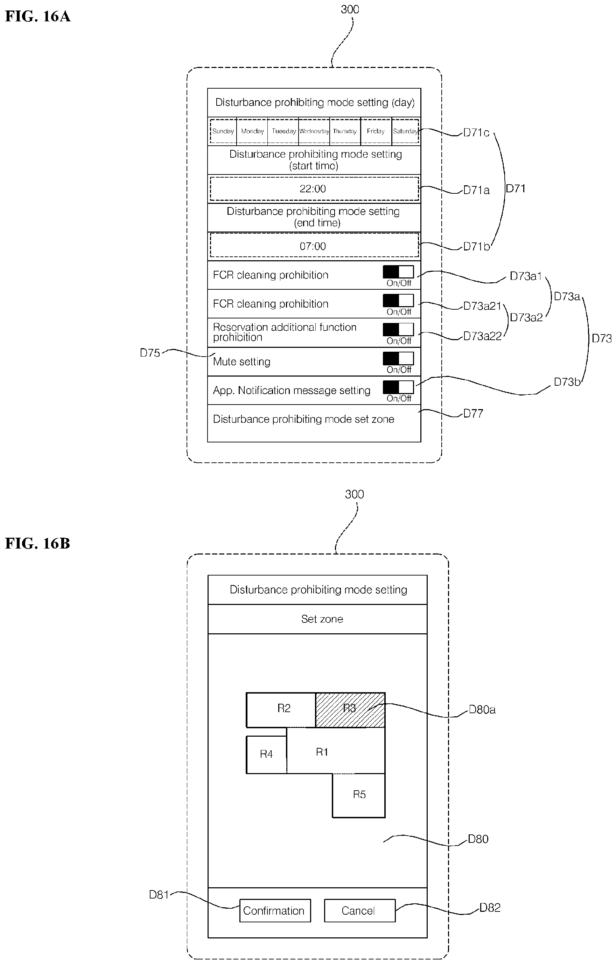

FIG. 16 is a diagram illustrating a screen for inputting a specific setting of the disturbance prohibiting mode.

### [Mode for Disclosure]

A moving robot 100 which is the present disclosure refers to a robot capable of self-moving by using a wheel or the like, and may be a home helper robot and a robot cleaner.

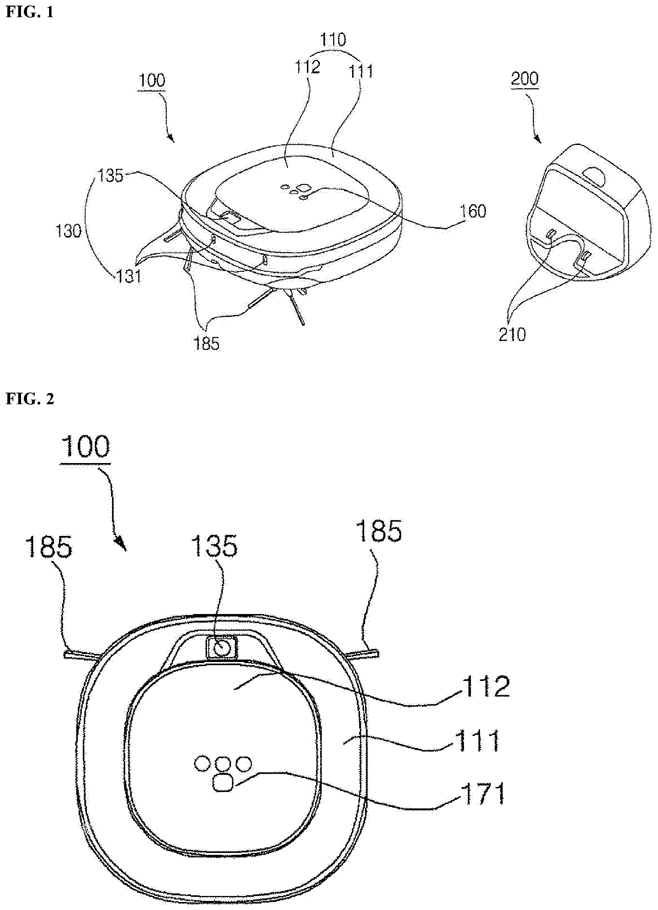

Hereinafter, referring to FIGS. 1 to 5, the robot cleaner 100 among the moving robots will be described as an example, but is not necessarily limited thereto.

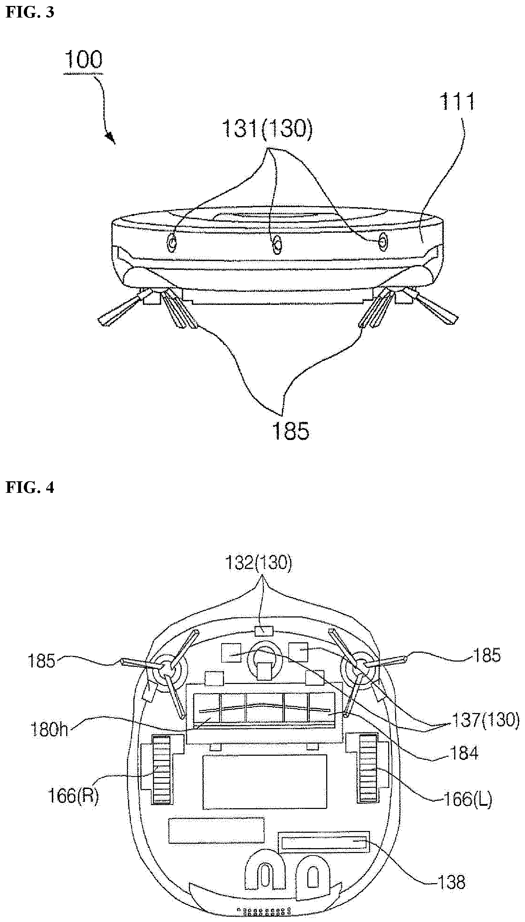

The moving robot 100 includes a main body 110. Hereinafter, when each portion of the main body 110 is defined, a portion facing a ceiling in a traveling zone is defined as an upper surface portion (refer to FIG. 2), a portion facing a floor in the traveling zone is defined as a bottom portion (refer to FIG. 4), and a portion which faces in a traveling direction in a portion forming a circumference of the main body 110 between the upper surface portion and the bottom portion is defined as a front surface portion (refer to FIG. 3). In addition, a portion facing in a direction opposite to the front surface portion of the main body 110 may be defined as a rear surface portion. The main body 110 may include a case 111 forming a space in which various components constituting the moving robot 100 are accommodated.

The moving robot 100 includes a sensing unit 130 which detects information outside the moving robot 100.

The sensing unit 130 may detect information on the traveling zone. The sensing unit 130 may detect an obstacle such as a wall, furniture, and a cliff on a traveling surface. The sensing unit 130 may detect information on a ceiling. The sensing unit 130 may detect an object placed on the traveling surface. The moving robot 100 may map the traveling zone through the information detected by the sensing unit 130.

The sensing unit 130 may include an image detector 135 which detects an external image. The image detector 135 photographs the traveling zone, and may include a digital camera. The digital camera may include an image sensor (for example, a CMOS image sensor) including at least one optical lens and a plurality of photodiodes (for example, pixel) forming an image by light passing through the optical lens, and a digital signal processor (DSP) which forms an image based on a signal output from the photodiode. The digital signal processor can generate not only a still image but also a moving image including a frame constituted by the still images.

The sensing unit 130 may include a distance detector 131 which detects a distance to an obstacle. The distance detector 131 may be disposed on the front surface portion of the main body 110. The distance detector 131 may detect an obstacle in front. A plurality of distance detectors 131 may be provided. The distance detector 131 may be implemented using ultrasonic waves or infrared rays. The distance detector 131 may be implemented using a camera.

The sensing unit 130 may include a cliff detector 132 which detects presence or absence of a cliff on the floor in the traveling zone. A plurality of cliff detectors 132 may be provided.

The sensing unit 130 may further include a lower image sensor 137 for acquiring an image of the floor.

The moving robot 100 includes a traveler 160 which moves the main body 110. The traveler 160 moves the main body 110 with respect to the floor. The traveler 160 may include at least one driving wheel 166 which moves the main body 110. The traveler 160 may include a drive motor. The driving wheels 166 may be provided on right and left sides of the main body 110, respectively, and hereinafter, are referred to as a left wheel 166(L) and a right wheel 166(R).

The left wheel 166(L) and the right wheel 166(R) may be driven by one driving motor. However, if necessary, a left wheel driving motor for driving the left wheel 166(L) and a right wheel drive motor for the right wheel 166(R) may be provided, respectively. The traveling direction of the main body 110 can be switched to the left or right by making a difference in rotational speeds of the left wheel 166(L) and the right wheel 166(R).

The moving robot 100 includes an operator 180 which performs a predetermined operation. The operator 180 generates noise and performs a predetermined operation. For example, a noise is generated to rotate a brush for sweeping, and a noise is generated to operate a suction motor for vacuum suction.

As an example, the operator 180 may be provided to perform housekeeping operations such as cleaning (sweeping, suction cleaning, mopping, or the like), washing a dish, cooking, washing, and garbage disposal. As another example, the operator 180 may be provided to perform an operation such as manufacturing or repairing an instrument. As still another example, the operator 180 may perform an operation such as finding an object or fighting an insect.

As still another example, the operator 180 may perform a security function for detecting an external intruder or a dangerous situation. The operator 180 may include a camera for performing the security function, and in this case, the image detector 135 can perform the function of the camera performing the security function.

Hereinafter, in the present embodiment, a case where the operator 180 performs a cleaning operation is described. However, a type of the operation of the operator 180 may be various, and need not be limited to the example of the description.

The moving robot 100 moves the traveling zone and can clean the floor by the operator 180. The operator 180 includes a suction device which sucks foreign substances, brushes 184 and 185 for performing the sweeping, a dust container (not illustrated) for storing the foreign substances collected by the suction device or the brushes, and/or a mop (not illustrated) for performing mopping.

A suction port 180h through which air is sucked may be formed on the bottom portion of the main body 110. The main body 110 may include a suction device (not illustrated) which provides suction power to allow air to be sucked through the suction port 180h and a dust container (not shown) which collects dust sucked together with air through the suction port 180h.

An opening for inserting and removing the dust container may be formed in the case 111, and a dust container cover 112 which opens and closes the opening may be rotatably provided with respect to the case 111.

A roll-type main brush 184 which has brushes exposed through the suction port 180h, and an auxiliary brush 185 which is located on a front side of the bottom portion of the main body 110 and has a plurality of blades extending radially may be provided. The dust is removed from the floor in the traveling zone by rotations of the brushes 184 and 185, and the dust separated from the floor is sucked through the suction port 180h and collected in the dust container.

A battery 138 may supply power required for the overall operation of the moving robot 100 as well as the drive motor.

The battery 177 is provided to be rechargeable. The moving robot 100 is docked to a charging stand 200 so that the battery 177 can be charged when a charging terminal 210 and a corresponding terminal 190 is connected to each other. When a charging amount of the battery 177 is less than or equal to a predetermined value, the moving robot 100 may perform traveling to return to the charging stand 200 for charging. During the return traveling, the moving robot 100 itself can detect a location of the charging stand 200.

The charging stand 200 may include a signal transmitter (not illustrated) for transmitting a predetermined return signal. The return signal may be an ultrasonic signal or an infrared signal, but is not limited thereto.

The moving robot 100 includes a communication module 170 which receives information. The communication module 170 may output or transmit information. The communication module 170 may include a communicator 175 which transmits and receives information to and from other external devices. The communication module 170 may include an input unit 171 for inputting information. The communication module 170 may include an output unit 173 for outputting information.

For example, the moving robot 100 may receive information directly from the input unit 171. As another example, the moving robot 100 may receive information input to a separate terminal 300 through the communicator 175.

For example, the moving robot 100 may directly output information to the output unit 173. As another example, the moving robot 100 may transmit information to a separate terminal 300 through the communication unit 175 so that the terminal 300 outputs the information.

The input unit 171 may receive ON/OFF command or various commands. The input unit 171 may include a button, a key, or a touch-type display. The input unit 171 may include a microphone for speech recognition. Although not illustrated, the input unit 171 may receive information on whether a disturbance prohibiting mode to be described later is activated, set information of the disturbance prohibiting mode, information whether a specific function to be described later is activated, and/or various set information of the specific function through the input unit 171.

The output unit 173 may inform a user of various information. The output unit 173 may include a speaker and/or display

The communicator 175 may be connected to a terminal device and/or another device located in a specific area through one of wired, wireless, and satellite communication methods to transmit and receive data.

The communicator 175 may be provided to communicate with other devices such as the terminal 300, a wireless router 400, and/or a server 500. The communicator 175 may communicate with other devices located within a specific area. The communicator 175 may communicate with the wireless router 400. The communicator 175 may communicate with the mobile terminal 300. The communicator 175 may communicate with server 500.

The communicator 175 may receive various command signals from the external device such as the terminal 300. The communicator 175 may transmit information to be output to the external device such as the terminal 300. The terminal 300 may output information received from the communicator 175.

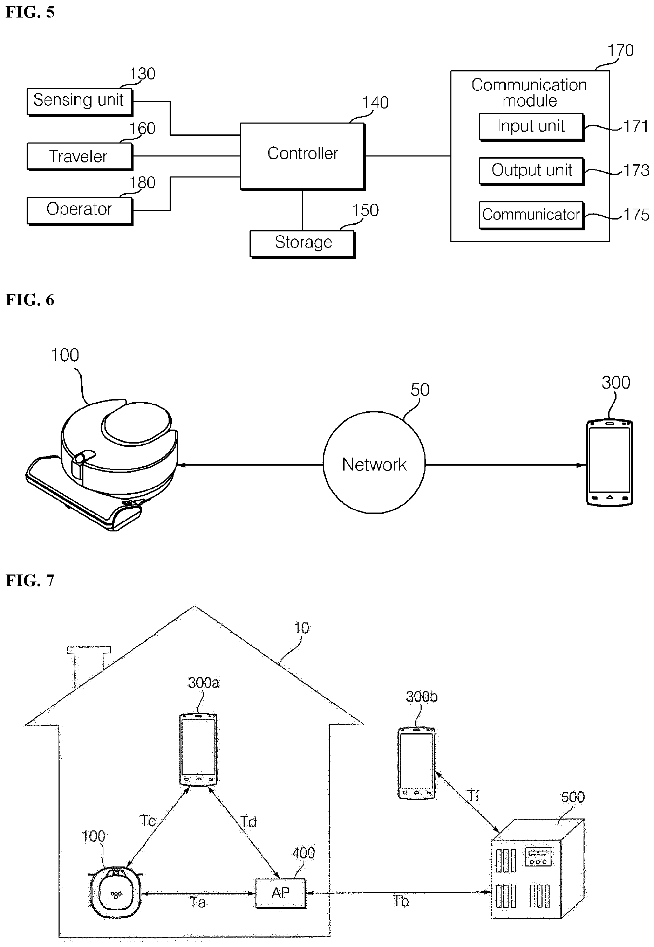

Referring to Ta of FIG. 7, the communicator 175 may wirelessly communicate with the wireless router 400. Referring to Tc of FIG. 7, the communicator 175 may wirelessly communicate with the mobile terminal 300a. Although not illustrated, the communicator 175 may wirelessly communicate directly with the server 500. For example, the communicator 175 may perform wireless communication through wireless communication technologies such as IEEE 802. 11 WLAN, IEEE 802.15 WPAN, UWB, Wi-Fi, Zigbee, Z-wave, and Blue-Tooth. The communicator 175 may vary depending on a communication method of another device or server with the communicator 175 communicates.

Information can be received from the moving robot 100 on the network through the communicator 175, and the moving robot 100 may be controlled based on the received information. For example, communicator 175 may receive various information from the terminal 300. The communicator 175 may receive information input from the terminal 300 such as a smartphone or a computer.

Information on the moving robot 100 may be transmitted to the network through the communicator 175. For example, the communicator 175 may transmit information to be output to the terminal 300. The terminal 300 may output information received from the communicator 175.

Referring to FIG. 6, the moving robot 100 can communicate with the terminal 300 through a predetermined network. The communicator 175 communicates with the terminal 300 through a predetermined network. The predetermined network means a communication network connected directly or indirectly by wire and/or wireless. That is, "the communicator 175 communicates with the terminal 300 through the predetermined network" includes not only a case where the communicator 175 and the terminal 300 directly communicate with each other but also a case where the communicator 175 and the terminal 300 indirectly communicate with each other.

The network may be built based on technologies such as Wi-Fi, Ethernet, zigbee, z-wave, and Bluetooth.

The communicator 175 may transmit information to be output to the terminal 300 through the predetermined network. The terminal 300 may transmit various information (set information of the disturbance prohibiting mode, or the like) to the communicator 175 through the predetermined network.

FIG. 7 is a conceptual diagram illustrating an example of the predetermined network. The moving robot 100, the wireless router 400, the server 500, and the mobile terminals 300a and 300b are connected to each other by the network to transmit and receive information to each other. Among them, the moving robot 100, the wireless router 400, and the mobile terminal 300a may be disposed in a building 10 such as a house. The server 500 may be implemented in the building 10, but may be implemented outside the building 10 as a more extensive network.

The wireless router 400 and the server 500 may include a communication module which can be connected to the network according to a predetermined communication protocol. The communicator 175 of the moving robot 100 is provided to be accessible to the network according to a predetermined communication protocol.

The moving robot 100 can exchange data with the terminal 300 through the network. The communicator 175 may exchange data with the wireless router 400 wirelessly or wirelessly, and consequently exchange data with the terminal 300.

The moving robot 100 can exchange data with the server 500 through the network. The communicator 175 may exchange data with the wireless router 400 wirelessly and wirelessly, and consequently may exchange data with the server 500.

Referring to Ta of FIG. 7, the wireless router 400 may be wirelessly connected to the moving robot 100. Referring to Tb of FIG. 7, the wireless router 400 may be connected to the server 8 through wired or wireless communication. The wireless router 400 may be wirelessly connected to the mobile terminal 300a through Td of FIG. 7.

Meanwhile, the wireless router 400 may allocate a wireless channel by a predetermined communication method to electronic devices in a predetermined area, and perform wireless data communication through the corresponding channel. Here, the predetermined communication method may be a WiFi communication method.

The wireless router 400 may communicate with the moving robot 100 located within a predetermined area range. The wireless router 400 may communicate with the mobile terminal 300a located within the predetermined area range. The wireless router 400 may communicate with the server 500.

The server 500 may be provided to be accessible through the Internet. Various terminals 300b connected to the Internet may communicate with the server 500. The terminal 300b may exemplify a mobile terminal such as a personal computer (PC) or a smart phone.

Referring to Tb of FIG. 7, the server 500 may be connected to the wireless router 400 by wired or wireless. Referring to Tf of FIG. 7, the server 500 may be wirelessly connected directly to the mobile terminal 300b. Although not illustrated, the server 500 may communicate directly with the moving robot 100.

The server 500 includes a processor capable of processing a program. The function of the server 500 may be performed by a central computer (cloud), but may also be performed by the computer or the mobile terminal of the user.

For example, the server 500 may be a server operated by a manufacturer of the moving robot 100. As another example, the server 500 may be a server operated by a public application store operator. As still another example, the server 500 may be provided in a home, and may be a home server which stores state information on home appliances or stores a content shared by the home appliances.

The server 500 may store information on the moving robot 100 and driving information (such as course information) and may register product information on the moving robot 100.

Referring to Td of FIG. 7, the mobile terminal 300a may be wirelessly connected to the wireless router 400 through wi-fi or the like. Referring to Tc of FIG. 7, the mobile terminal 300a may be wirelessly connected directly to the moving robot 100 through Bluetooth or the like. Referring to Tf of FIG. 7, the mobile terminal 300b may be wirelessly connected directly to the server 500 through a mobile communication service.

The terminal 300 may store information on the moving robot 100 and driving information (such as course information) and may register product information on the moving robot 100.

The network may further include a gateway (not illustrated).

The gateway may mediate communication between the moving robot 100 and the wireless router 400. The gateway may communicate with the moving robot 100 wirelessly. The gateway may communicate with the wireless router 400. For example, the communication between the gateway and the wireless router 400 may be performed based on Ethernet or Wi-Fi.

Referring to FIG. 5, the communication module 170 may receive information on whether the disturbance prohibiting mode is activated (On/Off). The communication module 170 may receive the set information in the disturbance prohibiting mode. The communication module 170 may receive information on a set time in the disturbance prohibiting mode. The communication module 170 may receive information on the specific function to be restricted in the disturbance prohibiting mode. The communication module 170 may receive information on a mode function to be activated in the disturbance prohibiting mode. The communication module 170 may receive information on a set zone of the disturbance prohibiting mode.

In addition, the communication module 170 may receive information whether the specific function to be described later is activated and various set information of the specific function.

The moving robot 100 includes a controller 140 which processes and determines various information such as mapping and/or recognizing the current location. The controller 140 may control the overall operation of the moving robot 100 through controls of various components constituting the moving robot 100. The controller 140 may be provided to map the traveling zone through the image and recognize the current location on the map. That is, the controller 140 may perform a function of Simultaneous Localization and Mapping (SLAM).

The controller 140 may receive and process information from the communication module 170. The controller 140 may receive and process information from the input unit 171. The controller 140 may receive and process information from the communicator 175. The controller 140 may receive and process detected information from the sensing unit 130.

The controller 140 may provide information to the communication module 170 for output. The controller 140 may provide information to the communicator 175. The controller 140 may control the output of the output unit 173. The controller 140 may control driving of the traveler 160. The controller 140 may control the operation of the operator 180.

The moving robot 100 includes a storage 150 which stores various information. The storage 150 records various information necessary for the control of the moving robot 100, and may include a volatile or nonvolatile recording medium.

The storage 150 may store the set information (for example, information on the set time, information on the specific function to be restricted, information on a mode function to be activated, and/or information on the set zone) in the disturbance prohibiting mode received from the communication module 170. The storage 150 may store set information on the specific function received from the communication module 170.

A map for the traveling zone may be stored in the storage 150. The map may be input by the external terminal capable of exchanging information through the moving robot 100 and communicator 175, or may be generated by the moving robot 100 learning by itself. In the former case, for example, the terminal 300 may be a remote control equipped with an application for setting a map, a PDA, a laptop, a smart phone, or a tablet.

An actual traveling zone may correspond to the traveling zone on the map. The traveling zone may be defined as a range obtained by summing all the zones on the plane on which the moving robot 100 has traveled and the zones on the plane on which the moving robot 100 travels currently.

The controller 140 may grasp a moving path of the moving robot 100 based on an operation of the traveler 160. For example, the controller 140 can grasp a current or past moving speed of the moving robot 100, a distance traveled, or the like, based on the rotational speed of the driving wheel 166, and can grasp the current or past direction change process according to the rotation directions of the respective driving wheels 166(L) and 166(R). Based on the traveling information of the moving robot 100 ascertained as above, the location of the moving robot 100 on the map may be updated. In addition, the location of the moving robot 100 on the map may be updated using the image information.

The user may change ON/OFF of the disturbance prohibiting mode through the input unit 171 or terminal 300. The controller 140 may determine whether the disturbance prohibiting mode is activated (whether the disturbance prohibiting mode is turned on or off) through the communication module 170.

In a state where the disturbance prohibiting mode is activated (turned on), the controller 140 determines whether the current time belongs to the set time. In order for the controller 140 to recognize the current time, the moving robot 100 may include a separate timer or receive information on the current time through the communicator 175.

In the state in which the disturbance prohibiting mode is activated, based on information on the set time received from the communication module 170, the controller 140 perform a control to restrict at least one specific function when the current time belongs to the set time.

The at least one specific function B to be restricted corresponds to information on the specific function B to be restricted which is received from the communication module 170. The user selects the at least one specific function B to be restricted of a plurality of predetermined specific functions A through the input unit 171 or the terminal 300.

In the state where the disturbance prohibiting mode is activated, based on information on the set zone received from the communication module 170, the controller 140 performs a control to prohibit the at least one specific function only in the set zone of the traveling zones when the current time belongs to the set time.

In the state where the disturbance prohibiting mode is activated, based on information on the function to be activated which is received from the communication module 170, the controller 140 performs a control so that at least one mode function is turned on when the current time belongs to the set time. The at least one mode function which is turned on corresponds to information on the mode function to be activated. The user selects the at least one mode function to be activated in the disturbance prohibiting mode of the preset mode function(s) through the input unit 171 or the terminal 300.

The controller 140 perform a control so that the selected at least one specific function is normally performed when the current time does not belong to the set time. When the current time does not belong to the set time, the controller 140 perform a control so that the selected at least one specific function is normally performed in the set zone. When the current time does not belong to the set time, the controller 140 performs a control so that the at least one mode function turned on in the disturbance prohibiting mode is not activated (turned off).

The disturbance prohibiting mode is a mode for restricting the occurrence of disturbance to the user such as a noise at the set time according to a need of the user. The moving robot 100 may perform a control to restrict an activated specific function at a set time in a state in which the disturbance prohibiting mode is activated, even if there is the activated specific function. The specific function restricted in the disturbance prohibiting mode may be selected by the user. Here, the "restricting" means to completely prohibit the specific function or partially to prohibit a function exertion. As an example of partially prohibiting function exertion, it may be controlled to prohibit the specific function only in some zones (set zone) of the traveling zone.

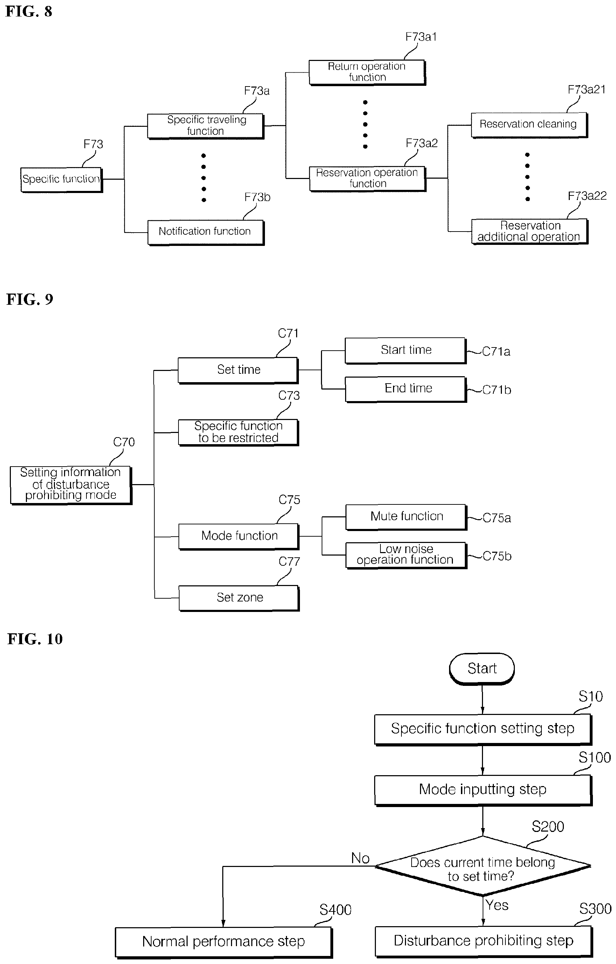

Hereinafter, with reference to FIG. 8, a specific function F73 will be described in detail as follows.

The specific function F73 referred to in the present description is a preset function of the moving robot which causes disturbance to the user such as a noise, light, and vibrations, and means that it can be selected as a function to be restricted in the disturbance prohibiting mode.

In the present description, regardless of the setting of the disturbance prohibiting mode, the specific function F73 preset in the moving robot 100 may be indicated by the "specific function A", and the specific function to be restricted which is selected in the disturbance prohibiting mode may be indicated by the "specific function B". This is only to avoid confusion of terms, and there is no other special meaning. Of course, the specific function B may be changed according to the selection in the disturbance prohibiting mode. Here, the description of the specific function F73 is the description of the specific function A.

At least one specific function may be preset in the moving robot. In the present embodiment, a plurality of specific functions are preset. However, one specific function can be preset.

In the present embodiment, the specific function F73 is described to be divided into a specific traveling function F73a and a notification function F73b. However, it is needless to say that other specific functions F73 may be preset.

In the plurality of preset specific functions A, some functions may be provided so that ON/OFF or a change of the setting can be performed, and other portions may be provided so that the ON/OFF or the change of the setting cannot be performed.

Specifically, ON/OFF of some specific functions A may be changed. That is, whether or not the specific function (A) is turned on or off can be determined by the user, irrespective of the activation and setting of the disturbance prohibiting mode. In addition, various settings of the specific function (A) may be provided to be changed by the user.

Specifically, other specific functions A may be always activated (turned on). A default setting of the specific function A irrespective of the setting of the disturbance prohibiting mode may be provided so that the user cannot change the default setting.

For example, in a reservation operation function F73a2 to be described later, ON/OFF or setting of a reservation time is changed by the user. However, a return operation function F73a1 to be described later, the return operation function cannot be turned off or the setting thereof cannot be changed by the user.

i In a state where the disturbance prohibiting mode is turned off or ii in a state where the disturbance prohibiting mode is turned on or in a state where the current time does not belong to the set time, some functions of at least one selected specific function B may be provided so that ON/OFF or the change of the setting can be performed, and other functions may be provided so that ON/OFF or the change of the setting cannot be performed.

The at least one specific function F73 may include at least one specific traveling function F73a required for the traveling of the moving robot 100. That is, the specific traveling function F73a means a specific function in which the movement of the moving robot 100 is necessarily involved.

In order to describe the return operation function (F73a1), an "automatic charging function" as a function other than the specific function F73 will be described as follows. The automatic charging function is a function which stops the operation and performs charging when the moving robot 100 determines that the charging amount of the battery is insufficient in a state where a predetermined operation of the moving robot 100 is incomplete. For example, the corresponding operation may be a cleaning operation or a patrol operation for security. The moving robot 100 may be preset to perform the automatic charging function.

The at least one specific traveling function F73a may include a return operation function (F73a1) for the moving robot 100 to continuously perform the corresponding incomplete operation after performing the automatic charging function.

For example, when the return operation function F73a1 is selected as the specific function B to be restricted in the disturbance prohibiting mode, if it is determined that the current time belongs to the set time after performing the automatic charging function, the moving robot 100 may maintain a docking state to the charging stand 200 without performing the return operation function F73a1. In this case, subsequent performance of the corresponding operation may start according to the return operation function F73a1 after the time when the current time does not belong to the set time, or even after the time when the current time does not belong to the set time, the corresponding operation may not be performed subsequently.

The at least one specific traveling function F73a may include at least one reservation operation function F73a2 which performs a predetermined operation at a reserved time. The user may enter a reservation time, and cause the moving robot 100 to perform a predetermined operation at a reserved time. For example, the predetermined operation may be a cleaning operation or a patrol operation for security.

The at least one reservation operation function F73a2 may include a reservation cleaning function F73a21 which performs cleaning at a reserved time. The at least one reservation operation function F73a2 may include a reservation addition operation function F73a22 which performs an additional operation other than the cleaning at a reserved time. For example, the additional operation may be the patrol operation for security, and in this case, the reserved additional operation function F73a22 may be referred to as a reserved home-guard function.

For example, when the at least one reservation operation function F73a2 is selected as the specific function B to be restricted in the disturbance prohibiting mode, if it is determined that the current belongs to the set time when the current time becomes the reservation time of the selected reservation operation function F73a2, the selected reservation operation function F73a2 is not performed.

The at least one specific function F73 may include a notification function F73b for the moving robot 100 to output a notification through the terminal 300. For example, information on a state, an operation, and/or a surrounding environment of the moving robot 100 may transmit a message to the terminal 300 of the user through the notification function F73b. There may be a silent mode depending on the setting of the terminal 300. However, when the terminal 300 receives the message, in general, a sound or vibration occurs, and thus, the notification function F73b may be one specific function F73.

Hereinafter, set information C70 of the disturbance prohibiting mode will be described in detail with reference to FIG. 9.

The set information C70 includes information on a set time C71. The set time information C71 is information about when to restrict the specific function B. The set time information C71 may include information C71a on a start time and information C71b on an end time. For example, the set time is between the start time C71a and the end time C71b. When the current time falls between the start time and the end time in the state where the disturbance prohibiting mode is activated, the specific function B is restricted. For example, in the set time, the start time C71a and the end time C71b may be set by inputting a time (hour, minute, or the like) of a day, a day of a week, year/month/day and/or a holiday.

The set information C70 may include information C73 on the specific function B to be restricted. The user can select at least one specific function B to be restricted in the disturbance prohibiting mode of the at least one specific function A. The information on the selected specific function B is stored in the storage 150 of the moving robot 100, and thus, the controller 140 restricts the specific function B when the current time belongs to the set time.

The set information C70 may include information C75 on a mode function to be activated in the disturbance prohibiting mode. The user may input a mode function to be activated by selecting at least one mode function to be activated in a disturbance prohibiting mode of at least one of preset mode functions.

The preset at least one mode function may include a mute function C75a for the moving robot 100 to be controlled not to output a sound to the output unit 173.

For example, when the mute function C75a is input as a mode function to be activated in the disturbance prohibiting mode, the mute function C75a is turned on when the current time belongs to the set time, and the mute function C75a is turned off when the current time does not belong to the set time.

The preset at least one mode function may include a low noise operation function C75b for the operator 180 of the moving robot 100 to be controlled to relatively reduce the noise and perform an operation. Here, the noise of the operator 180 becomes relatively large in a state where the low noise operation function C75b is turned off, and the noise of the operator 180 becomes relatively small when the low noise operation function (C75b) is turned on. For example, the controller 140 may perform a control to decrease the power of the motor of the operator 180 relatively when the low noise operation function C75b is turned on, and may perform a control to increase the power of the motor of the operator 180 relatively when the low noise operation mode is turned off.

For example, when the low noise operation function C75b is input as a mode function to be activated in the disturbance prohibiting mode, the low noise operation function C75b is turned on when the current time belongs to the set time, and the low noise operation function C75b is turned off when the current time does not belong to time.

The set information C70 may include information C77 on the set zone. The set zone may be provided to be set to some of the traveling zones of the moving robot 100.

The controller 140 may perform a control so that the at least one specific function is prohibited only in the set zone of the traveling zones when the disturbance prohibiting mode is activated and the current time belongs to the set time, based on the information C77 on the set zone.

When the specific traveling function is selected as the specific function B to be restricted, based on the information C77 on the set zone, the controller 140 may perform a control so that the selected specific traveling function is prohibited only in the set zone of the traveling zones when the disturbance prohibiting mode is activated and the current time belongs to the set time.

When the notification function is selected as the specific function B to be restricted, the controller 140 may perform a control so that the notification function is prohibited irrespective of the information on the set zone C77 when the disturbance prohibiting mode is activated and the current time belongs to the set time.

When the mode function C75 to be activated is input, based on the information C77 on the set zone, the controller 140 may perform a control so that the input mode function C75 is turned on only in the set zone of the traveling zones when the disturbance prohibiting mode is activated and the current time belongs to the set time.

Hereinafter, a control method of the moving robot 100 according to an embodiment of the present disclosure will be described with reference to FIGS. 10 to 14. In the flowcharts, overlapping contents are denoted by the same reference numerals, and overlapping descriptions are omitted.

The control method may be performed by the controller 140. The present disclosure may be a control method of the moving robot 100, or may be the moving robot 100 including a controller 140 performing the control method. The present disclosure may be a computer program including each step of the control method, or may be a recording medium in which a program for the control method performed by a computer is recorded. The "recording medium" means a computer-readable recording medium. The present disclosure may be a moving robot control system which includes both hardware and software.

Each step of the drawings of the flowchart of the control method and a combination of the drawings of the flowchart may be performed by computer program instructions. The instructions may be mounted on a general-purpose computer, a special purpose computer, or the like, and the instructions create a means for performing functions described in the step(s) of the flowchart.

Moreover, in some embodiments, the functions mentioned in the steps may occur out of a sequence. For example, two steps illustrated in succession may be performed substantially simultaneously, or in some cases, the steps may be performed in reverse order according to the corresponding function.

Referring to FIG. 10, the control method may include a specific function setting step S10 of inputting settings for the specific function A. If there is a specific function capable of changing on/off or other setting of the specific functions A, in the specific function setting step S10, the user may perform whether to turn the corresponding specific function A on or off, or perform change of other settings.

The specific function setting step S10 is a separate step from a mode inputting step S100 for setting the disturbance prohibiting mode. In the scenario of FIG. 10, the specific function setting step S10 is illustrated to be performed before the mode inputting step S100. However, the specific function setting step S10 and the mode inputting step S100 are steps which can be performed at any time according to selection of the user, and there is no limit to a sequential relationship therebetween. Of course, even during or after the disturbance prohibiting step S300 or the normal performance step S400 to be described later, the specific function setting step S10 or the mode inputting step S100 may proceed.

The control method includes the mode inputting step S100 for setting the disturbance prohibiting mode. In the mode inputting step (S100), whether the disturbance prohibiting mode is turned on or off may be selected.

In the mode inputting step S100, the set information of the disturbance prohibiting mode may be input. In the mode inputting step S100, the information on the set time is input.

In the mode inputting step S100, at least one specific function B, which is restricted when the current time belongs to the set time, is selected from at least one preset specific function A. By selecting at least one specific function (B) of a plurality of specific functions A, information on the specific function B to be restricted in the disturbance prohibiting step S300 is input.

In the mode inputting step S100, the at least one mode function is provided to be input. In the mode inputting step S100, by selecting at least one mode function, which is activated when the current time belongs to the set time, of at least one preset mode function, information on a mode function which is turned on in the disturbance prohibiting step S300 is input. The at least one mode function which can be input in the mode inputting step S100 may include at least one of the mute function and the low noise operation function.

In the mode inputting step S100, the information on the set zone is provided to be input. For example, the user can input the information on the set zone by selecting some zones on the map output to the terminal 300 or the like.

The control method includes a step S200 in which whether the current time belongs to the set time is determined.

The control method includes the disturbance prohibiting step S300 of restricting at least one specific function B when the current time belongs to the set time. When the information on the set zone is input in the mode inputting step, in the disturbance prohibiting step, the at least one specific function B is prohibited only in the set zone of the traveling zones.

The control method includes the normal performance step (S400) in which the at least one specific function B is normally performed when the current time does not belong to the set time.

If it is determined in step S200 that the current time belongs to the set time, the step proceeds to the disturbance prohibiting step S300. If it is determined in step S200 that the current time does not belong to the set time, the step proceeds the normal performance step S400.

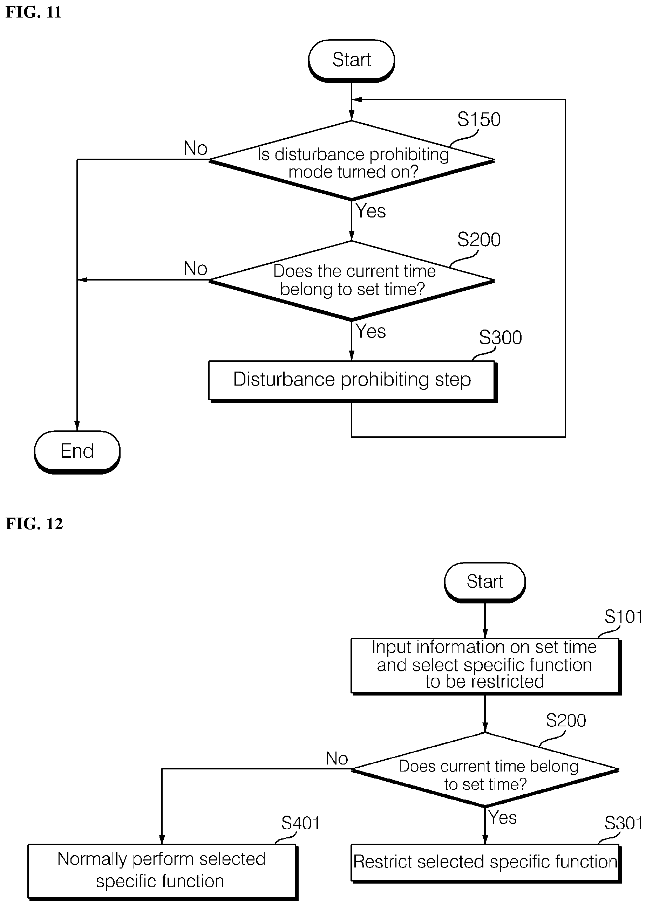

Referring to FIG. 11, the disturbance prohibiting step S300 is performed only when the disturbance prohibiting mode is turned on. A step S150 of determining whether the disturbance prohibiting mode is turned on is performed. If it is determined in step S150 that the disturbance prohibiting mode is turned on, a step S200 of determining whether the current time belongs to a set time is performed. If it is determined in step S200 that the current time belongs to the set time, the disturbance prohibiting step S300 starts.

Hereinafter, a process of the disturbance prohibiting step and the normal performance step according to the first to third scenarios will be described as follows with reference to FIGS. 12 to 14. In the first to third scenarios, the disturbance prohibiting mode is turned on.

The first scenario with reference to FIG. 12 will be described as follows. In a mode selection step S101, the information on the set time of the disturbance prohibiting mode is input, and a specific function B to be restricted in the disturbance prohibiting mode is selected. For example, the specific function B to be restricted may be the return operation function. Then, the step S200 proceeds. When the current time belongs to the set time based on a determination result in the step S200, a disturbance prohibiting step S301 in which the selected specific function B is restricted is performed. Meanwhile, when the current time does not belong to the set time based on a determination result in step S200, a normal performance step S401 in which the selected specific function B is normally performed is performed.

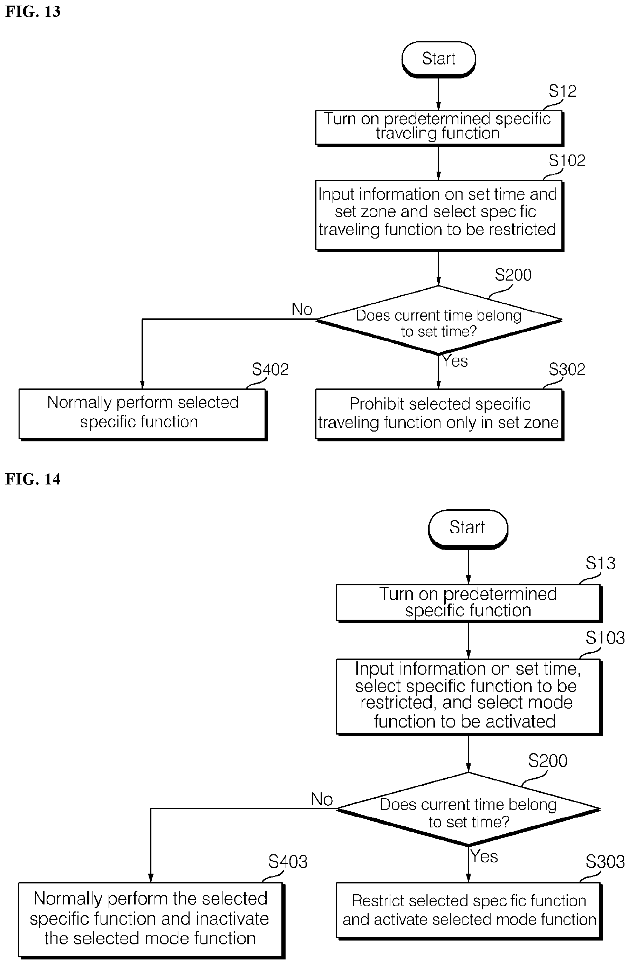

The second scenario will be described as follows with reference to FIG. 13. In the specific function setting step S12, the specific traveling function is turned on as a specific function A preset by the user. For example, the specific traveling function which is turned on in step S12 may be the reservation operation function. Thereafter, in the mode selection step S102, the information on the set time and the information on the set zone in the disturbance prohibiting mode are input, and the specific function B to be restricted in the disturbance prohibiting mode is selected. For example, the specific function B to be restricted may be the reservation operation function turned on. In this case, in the disturbance prohibiting step S302, the selected specific traveling function is prohibited only in the set zone of traveling zones. In the step S302, the selected specific function B is normally performed in the remaining zones excluding the set zone of the traveling zones. For example, when the selected specific function B is the reservation cleaning function which cleans all traveling zones at a set reservation time, if the set reservation time belongs to the set time, when the current time becomes the reservation time and the disturbance prohibiting step S302 proceeds, the moving robot performs reserved cleaning of only the zone excluding the set zone of the traveling zones. Meanwhile, in the normal performance step S402, the selected specific traveling function is normally performed.

The third scenario will be described as follows with reference to FIG. 14. In a specific function setting step S13, a predetermined specific function A preset by the user is turned on. Then, in a mode selection step S103, the information on the set time of the disturbance prohibiting mode is input, and the specific function B to be restricted in the disturbance prohibiting mode is selected. In step S103, at least one mode function to be activated of the disturbance prohibiting mode is selected (input). For example, the mode function to be activated may be the mute function. In this case, in the disturbance prohibiting step S303, the selected specific function B is restricted, and the selected at least one mode function is activated (turned on). Meanwhile, in the normal performance step S403, the selected specific function B is normally performed, and the selected mode function is inactivated (turned off).

Further, although not illustrated, the information on the set zone may be input in the mode inputting step S103. In this case, in the disturbance prohibiting step S303, the mode function selected in the mode inputting step S103 is turned on only in the set zone of the traveling zone. For example, when the selected mode function is the mute function, in the disturbance prohibiting step S303, the moving robot 100 may be controlled to be muted only in the set zone.

Hereinafter, an example of a user environment (interface) for implementing the control method will be described as follows with reference to FIGS. 15 and 16. FIGS. 15 and 16 are diagrams illustrating an example of a display screen, and a display of the terminal 300 is exemplified, but is not necessarily limited thereto. In addition, in order to select a display portion and an input portion appearing on the screens of FIGS. 15 and 16, a method of touching the screen in the present embodiment is exemplified, but it is not necessary to be limited thereto.

In the present embodiment, information input to a separate terminal 300 is received through the communicator 175, and the screens of FIGS. 15 and 16 are screens of the touch screen of the terminal 300. However, as another example, the information may be input from the input unit 171 such as a touch screen or other buttons on the main body 110 of the moving robot 100, and the screens of FIGS. 15 and 16 may be implemented on the touch screen on the main body 110.

Referring to FIG. 15(a), registration robot displays D1 and D2 displaying a list of moving robots registered in an application may be output. In addition, a registration input unit D10 for registering the moving robot to the application may be additionally output to the screen of FIG. 15(a). By selecting (touching) the registration input unit D10, a moving robot capable of wireless connection through a network may be additionally registered in the application. When the user selects (touches) any one D2 of at least one or more robot displays D1 and D2 which are already registered, more detailed information on the corresponding moving robot (robot cleaner) appears on the screen of FIG. 15(b).

A name display D20 of the selected moving robot (robot cleaner) and a state display D21 displaying the state of the moving robot are output to the screen of FIG. 15(b). In addition, when the user selects (touches), a first instruction input unit D31 capable of directly instructing the moving robot (robot cleaner) may be output. In addition, when the user selects (touches), a second instruction input unit D32 which can directly instruct the moving robot to perform an additional operation (that is, security patrol function) may be output. When the user selects (touches), a menu input unit D14 in which various menus for the moving robot appear is output to the screen of FIG. 15(b).

The screen of FIG. 15(c) is a screen which appears when the menu input unit D14 of FIG. 15(b) is selected. The menu displayed by the menu input unit D14 is an additional operation input unit D41, a reservation cleaning input unit D42, a cleaning diary input unit D43, a smart diagnostic input unit D44 and a setting input unit D45.

When a selection is performed, the additional operation input unit D41, which is set so that a screen for inputting various settings for the reservation additional operation function as the specific function setting step S10 appears, is output to the screen of FIG. 15(c). When the additional operation input unit D41 is selected (touched), a screen capable of inputting various settings for the additional operation appears.

When a selection is performed, the reservation cleaning input unit D42, which is set so that a screen for inputting various settings for the reservation cleaning function as the specific function setting step S10 appears, is output to the screen of FIG. 15(c). When the reservation cleaning input unit D42 is selected (touched), a screen capable of inputting various settings for the reservation cleaning appears.

The cleaning diary input unit 43, which is changed to a screen outputting information on a cleaning diary other than the specific function A, is output to the screen of FIG. 15(c). When the cleaning diary input unit D43 is selected (touched), a screen displaying information on a cleaning schedule of the corresponding moving robot appears.

The smart diagnosis input unit 44, which is changed to a screen for various setting of a smart diagnosis function other than the specific function A, is output to the screen of FIG. 15(c). When the smart diagnosis input unit D44 is selected (touched), a screen on which various settings for a self-diagnosis of the corresponding moving robot can be input appears.

The setting input unit D45, which is preset so that the screen which displays various information or the like of the corresponding moving robot when the user selects (touches) and can change various settings, is output to the screen of FIG. 15(c).

The screen of FIG. 15(d) is a screen which appears when the setting input unit D45 of FIG. 15(c) is selected.

A name setter D51 selected to change the name of the corresponding moving robot, a sound guide setter D52 selected to change a sound guide voice of the corresponding moving robot or application, and a network setter D53 selected to change the network setting of the corresponding moving robot are output to the screen of FIG. 15(d). In addition, a version display D54 on which a version of a product or application is displayed is output to the screen of FIG. 15(d). Moreover, a registration deletion input unit D55 selected to delete the registration of the corresponding moving robot is output to the screen of FIG. 15(d).

Moreover, a notification function switcher D56 selected to change ON/OFF of the notification function as the specific function setting step S10 is output to the screen of FIG. 15(d). In FIG. 15(d), a state where the notification function is turned off is displayed on the notification function switcher D56, and the user selects (touches) the notification function switcher D56 to change the notification function so that the notification function is turned on.

Moreover, a mode switcher D60 selected to change ON/OFF of the disturbance prohibiting mode as the mode inputting step S100 is output to the screen of FIG. 15(d). A state where the disturbance prohibiting mode is turned on in the mode switcher D60 is displayed in FIG. 15(d), the user selects (touches) the mode switcher D60 to change the state of the notification function to an OFF state.

Moreover, when a selection is performed, a mode setting input unit D70, which is set so that a screen for inputting various settings for the disturbance prohibiting mode as the mode input step S100 appears, is output to the screen of FIG. 15(d). When the mode setting input unit D70 is selected (touched), a screen of FIG. 16(a) capable of inputting various settings for the disturbance prohibiting mode appears.

Referring to FIG. 16(a), a set time input unit D71 for inputting the information on the set time is output from the mode inputting step S100. In the set time input unit D71, a day input unit D71c for selecting a day to which the set time is applied is selected. The set time input unit D71 includes an input unit D71a for inputting a start time of the set time and an input unit D71b for inputting an end time. The specific function B can be controlled to be restricted only when the current time belongs to the set start time and end time of the corresponding day selected in the day input unit D71c.

Referring to FIG. 16(a), in the mode inputting step S100, a specific function selector D73 for selecting the specific function B to be restricted is output. The specific function selector D73 includes a specific traveling function selector D73a for selecting whether to restrict the specific traveling function and a notification function selector D73b for selecting whether to restrict the notification function. The specific traveling function selector D73a includes a return operation function selector D73a1 for selecting whether to restrict the return operation function and a reservation operation function selector D73a2 for selecting whether to restrict the reservation operation function. The reservation operation function selector D73a2 includes a reservation cleaning function selector D73a21 for selecting whether to restrict the reservation cleaning function and a reservation additional operation function selector D73a22 for selecting whether to restrict the reservation additional operation function.

When the return operation function selector D73a1 is selected and the additional operation function becomes the specific function B to be restricted, the additional operation function is restricted when the current time belongs to the set time.

When the reservation cleaning function selector D73a21 is selected and the reservation cleaning function becomes the specific function B to be restricted, the reservation cleaning function is restricted when the current time belongs to the set time.

When the reservation additional operation function selector D73a212 is selected and the reservation additional operation function becomes the specific function B to be restricted, the reservation additional operation function is restricted when the current time belongs to the set time.

When the notification function selector D73b is selected and the notification function becomes the specific function to be restricted, the notification function is prohibited when the current time belongs to the set time.

Moreover, when a selection is performed, a set zone input unit D77, which is preset so that the screen for inputting the information on the set zone as the mode inputting step S100 appears, is output to the screen of FIG. 16(a). When the set zone input unit D77 is selected, the screen of FIG. 16(a) is output.

Referring to FIG. 16(b), in the mode inputting step S100, a traveling zone display D80 for selecting the set zone is output, and the user selects some zones of the traveling zone display to input the set zone. In the example of FIG. 16(b), an area display D80a indicating that some zones R3 of the traveling zones are selected is output. The user selects the set zone in the traveling zone display D80 and then the confirmation D81 is selected, and thus, the selected set zone is finally stored as the set zone in disturbance prohibiting mode. Meanwhile, after the user selects the set zone on the traveling zone display D80, the user may select a canceller D82 to cancel the selection of the set zone.

## Claims

1. A control method of a moving robot (100) comprising:
a mode inputting step (S100) of receiving an input for information on a set time (C71) to set a predetermined disturbance prohibiting mode; and
a disturbance prohibiting step (S300) of restricting at least one specific function (F73; C73) when a current time belongs to the set time (C71),
further comprising:
a normal performance step (S400) of normally performing the at least one specific function (F73; C73) when the current time does not belong to the set time (C71),
wherein at least one mode function (C75) is provided to be input in the mode inputting step (S100), and
when the at least one mode function (C75) is input in the mode inputting step (S100), the at least one mode function (C75) is turned on in the disturbance prohibiting step (S300) and the at least one mode function (C75) is turned off in the normal performance step (S400).

2. The control method of a moving robot (100) according to claim 1, wherein whether the disturbance prohibiting mode is turned on or off is determined in the mode inputting step (S100), and
the disturbance prohibiting step (S300) is performed only when the disturbance prohibiting mode is turned on.

3. The control method of a moving robot (100) of claim 1, wherein in the mode inputting step (SI00), in at least one preset specific function (F73; C73), the at least one specific function (F73; C73) which is restricted when the current time belongs to the set time (C71) is selected.

4. The control method of a moving robot (100) according to claim 3, wherein the at least one preset specific function (F73; C73) includes at least one specific traveling function (F73a) required for traveling of a moving robot (100).

5. The control method of a moving robot (100) of claim 4, wherein an automatic charging function of stopping a predetermined operation and performing charging when the moving robot (100) determines that a charging amount of a battery is insufficient in a state where the predetermined operation is uncompleted, and a return operation function (F73a1) of performing subsequently the uncompleted operation after the moving robot (100) performs the automatic charging function are preset, and
the at least one specific traveling function (F73a) includes the return operation function (F73al).

6. The control method of a moving robot (100) of claim 4, wherein the at least one specific traveling function (F73a) includes at least one reservation operation function (F73a2) of performing a predetermined operation at a reserved time.

7. The control method of a moving robot (100) of claim 4, wherein information on a set zone (C77) is provided to be input in the mode inputting step (S100), and
the specific traveling function (F73a) is set in the mode inputting step (SI00), and when the information on the set zone (C77) is input, the selected specific traveling function (F73a) is prohibited only in the set zone (C77) of the traveling zones in the disturbance prohibiting step (S300).

8. The control method of a moving robot (100) of claim 3, wherein the at least one preset specific function (F73; C73) includes a notification function of the moving robot (100) outputting a notification through a terminal.

9. The control method of a moving robot (100) of claim 3, further comprising: a normal performance step (S400) of normally performing the at least one selected specific function (F73; C73) when the current time does not belong to the set time (C71).

10. The control method of a moving robot (100) of claim 10, wherein the at least one mode function (C75) input in the mode inputting step (SI00) includes at least one of a mute function (C75a) of the moving robot (100) performing a control so that a sound is not output to an output unit and ii a low noise operation function of an operator of the moving robot (100) performing a control to perform an operation while relatively reducing a noise.

11. The control method of a moving robot (100) of claim 10, wherein information on a set zone (C77) is provided to be input in the mode inputting step (S100), and
when the at least one mode function (C75) is input and the information on the set zone (C77) is input in the mode inputting step (S100), the mode function (C75) is turned on only in the set zone (C77) of the traveling zones in the disturbance prohibiting step (S300).

12. The control method of a moving robot (100) of claim 1, wherein information on a set zone (C77) is provided to be input in the mode inputting step (S100), and
when the information on the set zone (C77) is input in the mode inputting step (SI00), the at least one specific function (F73; C73) is prohibited only in the set zone (C77) of the traveling zones in the disturbance prohibiting step (S300).

13. A moving robot (100) comprising:
a traveler (160) which moves a main body (110);
an operator (180) which performs a predetermined operation;
a communication module (170) which receives information; and
a controller (140) which performs a control to restrict at least one specific function (F73; C73) based on information (C70) on a set time (C71) received from the communication module (170) when a current set included in the set time (C71),
wherein the controller (140) is configured to:
normally perform the at least one specific function when the current time does not belong to the set time and
when the at least one mode function (C75) is input in the mode inputting step (SI00), turn on the at least one mode function (C75) in the disturbance prohibiting step (S300) and turn off the at least one mode function (C75) in the normal performance step (S400).

14. The moving robot (100) of claim 13, wherein the controller (140) is configured to perform a control to prohibit the at least one specific function (F73; C73) only in the set zone (C77) of traveling zones when the current time belongs to the set time (C71), based on the information (C70) on the set zone (C77) received from the communication module (170).

## Patentansprüche

1. Steuerverfahren für einen sich bewegenden Roboter (100), das Folgendes umfasst:
einen Moduseingabeschritt (S100) zum Empfangen einer Eingabe von Informationen über eine eingestellte Zeit (C71), um einen vorgegebenen Störungsverhinderungsmodus einzustellen; und
einen Störungsverhinderungsschritt (S300) zum Beschränken mindestens einer bestimmten Funktion (F73; C73), wenn eine aktuelle Zeit der eingestellten Zeit (C71) angehört, und
das ferner Folgendes umfasst:
einen Normalausführungsschritt (S400) zum normalen Ausführen der mindestens einen bestimmten Funktion (F73; C73), wenn die aktuelle Zeit nicht der eingestellten Zeit (C71) angehört, wobei
vorgesehen ist, dass im Moduseingabeschritt (S100) mindestens eine Modusfunktion (C75) eingegeben wird, und
dann, wenn im Moduseingabeschritt (S100) die mindestens eine Modusfunktion (C75) eingegeben wird, die mindestens eine Modusfunktion (C75) im Störungsverhinderungsschritt (S300) eingeschaltet wird und die mindestens eine Modusfunktion (C75) im Normalausführungsschritt (S400) ausgeschaltet wird.

2. Steuerverfahren für einen sich bewegenden Roboter (100) nach Anspruch 1, wobei im Moduseingabeschritt (S100) bestimmt wird, ob der Störungsverhinderungsmodus ein- oder ausgeschaltet ist, und
der Störungsverhinderungsschritt (S300) lediglich ausgeführt wird, wenn der Störungsverhinderungsmodus eingeschaltet ist.

3. Steuerverfahren für einen sich bewegenden Roboter (100) nach Anspruch 1, wobei im Moduseingabeschritt (S100) in mindestens einer voreingestellten bestimmten Funktion (F73; C73) die mindestens eine bestimmte Funktion (F73; C73) gewählt wird, die beschränkt wird, wenn die aktuelle Zeit der eingestellten Zeit (C71) angehört.

4. Steuerverfahren für einen sich bewegenden Roboter (100) nach Anspruch 3, wobei die mindestens eine voreingestellte bestimmte Funktion (F73; C73) mindestens eine bestimmte Bewegungsfunktion (F73a) enthält, die zum Bewegen eines sich bewegenden Roboters (100) erforderlich ist.

5. Steuerverfahren für einen sich bewegenden Roboter (100) nach Anspruch 4, wobei eine automatische Ladefunktion zum Stoppen einer vorgegebenen Operation und Ausführen eines Ladens, wenn der sich bewegende Roboter (100) bestimmt, dass eine Ladungsmenge einer Batterie in einem Zustand, in dem die vorgegebene Operation unvollständig ist, unzureichend ist, und eine Rückführungsoperationsfunktion (F73a1) zum anschließenden Ausführen der unvollständigen Operation, nachdem der sich bewegende Roboter (100) die automatische Ladefunktion ausgeführt hat, voreingestellt sind und
die mindestens eine bestimmte Bewegungsfunktion (F73a) die Rückführungsoperationsfunktion (F73a1) enthält.

6. Steuerverfahren für einen sich bewegenden Roboter (100) nach Anspruch 4, wobei die mindestens eine bestimmte Bewegungsfunktion (F73a) mindestens eine Reservierungsoperationsfunktion (F73a2) zum Ausführen einer vorgegebenen Operation zu einer reservierten Zeit enthält.

7. Steuerverfahren für einen sich bewegenden Roboter (100) nach Anspruch 4, wobei vorgesehen ist, dass Informationen über eine eingestellte Zone (C77) im Moduseingabeschritt (S100) eingegeben werden, und
die bestimmte Bewegungsfunktion (F73a) im Moduseingabeschritt (S100) eingestellt wird und dann, wenn die Informationen über die eingestellte Zone (C77) eingegeben werden, die gewählte bestimmte Bewegungsfunktion (F73a) im Störungsverhinderungsschritt (S300) lediglich in der eingestellten Zone (C77) der Bewegungszonen verhindert wird.

8. Steuerverfahren für einen sich bewegenden Roboter (100) nach Anspruch 3, wobei die mindestens eine voreingestellte bestimmte Funktion (F73; C73) eine Benachrichtigungsfunktion zum Ausgeben einer Benachrichtigung durch den sich bewegenden Roboter (100) über ein Endgerät enthält.

9. Steuerverfahren für einen sich bewegenden Roboter (100) nach Anspruch 3, das ferner Folgendes umfasst: einen Normalausführungsschritt (S400) zum normalen Ausführen der mindestens einen gewählten bestimmten Funktion (F73; C73), wenn die aktuelle Zeit nicht der eingestellten Zeit (C71) angehört.

10. Steuerverfahren für einen sich bewegenden Roboter (100) nach Anspruch 10, wobei die mindestens eine Modusfunktion (C75), die im Moduseingabeschritt (S100) eingegeben wird, eine Stummschaltungsfunktion (C75a) des sich bewegenden Roboters (100), die eine Steuerung derart, dass kein Schall ausgeben wird, zu einer Ausgabeeinheit ausführt, und/oder ii eine Funktion zum geräuscharmen Betrieb zum Ausführen einer Steuerung durch einen Bediener des sich bewegenden Roboters (100), um eine Operation durchzuführen, während ein Geräusch relativ verringert wird, enthält.

11. Steuerverfahren für einen sich bewegenden Roboter (100) nach Anspruch 10, wobei vorgesehen ist, dass im Moduseingabeschritt (S100) Informationen über eine eingestellte Zone (C77) eingegeben werden, und
dann, wenn im Moduseingabeschritt (S100) die mindestens eine Modusfunktion (C75) eingegeben wird und die Informationen über die eingestellte Zone (C77) eingegeben werden, die Modusfunktion (C75) im Störungsverhinderungsschritt (S300) lediglich in der eingestellten Zone (C77) der Bewegungszonen eingeschaltet wird.

12. Steuerverfahren für einen sich bewegenden Roboter (100) nach Anspruch 1, wobei vorgesehen ist, dass im Moduseingabeschritt (S100) Informationen über eine eingestellte Zone (C77) eingegeben werden, und
dann, wenn im Moduseingabeschritt (S100) die Informationen über die eingestellte Zone (C77) eingegeben werden, im Störungsverhinderungsschritt (S300) die mindestens eine bestimmte Funktion (F73; C73) lediglich in der eingestellten Zone (C77) der Bewegungszonen verhindert wird.

13. Sich bewegender Roboter (100), der Folgendes umfasst:
eine Bewegungsvorrichtung (160), die einen Hauptkörper (110) bewegt;
einen Bediener (180), der eine vorgegebene Operation ausführt;
ein Kommunikationsmodul (170), das Informationen empfängt; und
eine Steuereinheit (140), die eine Steuerung ausführt, um mindestens eine bestimmte Funktion (F73; C73) auf der Grundlage von Informationen (C70) über eine eingestellte Zeit (C71), die vom Kommunikationsmodul (170) empfangen wurden, zu beschränken, wenn eine aktuelle Zeit in der eingestellten Zeit (C71) enthalten ist, wobei
die Steuereinheit (140) konfiguriert ist zum
normalen Ausführen der mindestens einen bestimmten Funktion, wenn die aktuelle Zeit nicht der eingestellten Zeit angehört, und
dann, wenn im Moduseingabeschritt (S100) die mindestens eine Modusfunktion (C75) eingegeben wird, Einschalten der mindestens einen Modusfunktion (C75) im Störungsverhinderungsschritt (S300) und Ausschalten der mindestens einen Modusfunktion (C75) im Normalausführungsschritt (S400).

14. Sich bewegender Roboter (100) nach Anspruch 13, wobei die Steuereinheit (140) konfiguriert ist, auf der Grundlage der Informationen (C70) über die eingestellte Zone (C77), die vom Kommunikationsmodul (170) empfangen wurden, eine Steuerung durchzuführen, um die mindestens eine bestimmte Funktion (F73; C73) lediglich in der eingestellten Zone (C77) aus Bewegungszonen zu verbieten, wenn die aktuelle Zeit der eingestellten Zeit (C71) angehört.

## Revendications

1. Procédé de commande d'un robot mobile (100) comportant :
une étape d'entrée de mode (S100) consistant à recevoir une entrée d'information concernant une heure de consigne (C71) pour définir un mode d'interdiction de dérangement prédéterminé ; et
une étape d'interdiction de dérangement (S300) consistant à restreindre au moins une fonction spécifique (F73 ; C73) lorsqu'une heure actuelle fait partie de l'heure de consigne (C71),
comportant en outre :
une étape d'exécution normale (S400) consistant à exécuter normalement la au moins une fonction spécifique (F73 ; C73) lorsque l'heure actuelle ne fait pas partie de l'heure de consigne (C71),
dans lequel au moins une fonction de mode (C75) est destinée à être entrée à l'étape d'entrée de mode (S100), et
lorsque la au moins une fonction de mode (C75) est entrée à l'étape d'entrée de mode (S100), la au moins une fonction de mode (C75) est activée à l'étape d'interdiction de dérangement (S300) et la au moins une fonction de mode (C75) est désactivée à l'étape d'exécution normale (S400).

2. Procédé de commande d'un robot mobile (100) selon la revendication 1, dans lequel il est déterminé si le mode d'interdiction de dérangement est activé ou désactivé à l'étape d'entrée de mode (S100), et
l'étape d'interdiction de dérangement (S300) est exécutée uniquement lorsque le mode d'interdiction de dérangement est activé.

3. Procédé de commande d'un robot mobile (100) selon la revendication 1, dans lequel à l'étape d'entrée de mode (S100), dans au moins une fonction spécifique prédéfinie (F73 ; C73), la au moins une fonction spécifique (F73 ; C73) qui est restreinte lorsque l'heure actuelle fait partie de l'heure de consigne (C71), est sélectionnée.

4. Procédé de commande d'un robot mobile (100) selon la revendication 3, dans lequel la au moins une fonction spécifique prédéfinie (F73 ; C73) inclut au moins une fonction de déplacement spécifique (F73a) requise pour le déplacement du robot mobile (100).

5. Procédé de commande d'un robot mobile (100) selon la revendication 4, dans lequel une fonction de charge automatique consistant à arrêter une opération prédéterminée et effectuer une charge lorsque le robot mobile (100) détermine qu'une quantité de charge d'une batterie est insuffisante dans un état où l'opération prédéterminée n'est pas achevée, et une fonction d'opération de retour (F73a1) consistant à exécuter ultérieurement l'opération non achevée après que le robot mobile (100) exécute la fonction de charge automatique, sont prédéfinies, et
la au moins une fonction de déplacement spécifique (F73a) inclut la fonction d'opération de retour (F73a1).

6. Procédé de commande d'un robot mobile (100) selon la revendication 4, dans lequel la au moins une fonction de déplacement spécifique (F73a) inclut au moins une fonction d'opération de réservation (F73a2) consistant à exécuter une opération prédéterminée à une heure réservée.

7. Procédé de commande d'un robot mobile (100) selon la revendication 4, dans lequel une information concernant une zone définie (C77) est destinée à être entrée à l'étape d'entrée de mode (S100), et
la fonction de déplacement spécifique (F73a) est définie à l'étape d'entrée de mode (S100), et lorsque l'information concernant la zone définie (C77) est entrée, la fonction de déplacement spécifique sélectionnée (F73a) est interdite uniquement dans la zone définie (C77) parmi les zones de déplacement à l'étape d'interdiction de dérangement (S300).

8. Procédé de commande d'un robot mobile (100) selon la revendication 3, dans lequel la au moins une fonction spécifique prédéfinie (F73 ; C73) inclut une fonction de notification du robot mobile (100) générant une notification par l'intermédiaire d'un terminal.

9. Procédé de commande d'un robot mobile (100) selon la revendication 3, comportant en outre : une étape d'exécution normale (S400) consistant à exécuter normalement la au moins une fonction spécifique sélectionnée (F73 ; C73) lorsque l'heure actuelle ne fait pas partie de l'heure de consigne (C71).

10. Procédé de commande d'un robot mobile (100) selon la revendication 10, dans lequel la au moins une fonction de mode (C75) entrée à l'étape d'entrée de mode (S100) inclut au moins une fonction parmi une fonction de mise en sourdine (C75a) du robot mobile (100) exécutant une commande de sorte qu'un son n'est pas émis sur une unité de sortie et une fonction d'opération à faible bruit d'un opérateur du robot mobile (100) exécutant une commande pour exécuter une opération tout en réduisant un bruit de manière relative.

11. Procédé de commande d'un robot mobile (100) selon la revendication 10, dans lequel une information concernant une zone définie (C77) est destinée à être entrée à l'étape d'entrée de mode (S100), et
lorsque la au moins une fonction de mode (C75) est entrée et que l'information concernant la zone définie (C77) est entrée à l'étape d'entrée de mode (S100), la fonction de mode (C75) est activée uniquement dans la zone définie (C77) parmi les zones de déplacement à l'étape d'interdiction de dérangement (S300).

12. Procédé de commande d'un robot mobile (100) selon la revendication 1, dans lequel une information concernant une zone définie (C77) est destinée à être entrée à l'étape d'entrée de mode (S100), et
lorsque l'information concernant la zone définie (C77) est entrée à l'étape d'entrée de mode (S100), la au moins une fonction spécifique (F73 ; C73) est interdite uniquement dans la zone définie (C77) parmi les zones de déplacement à l'étape d'interdiction de dérangement (S300).

13. Robot mobile (100) comportant :
un dispositif de déplacement (160) qui met en mouvement un corps principal (110) ;
un opérateur (180) qui exécute une opération prédéterminée ;
un module de communication (170) qui reçoit des informations ; et
une commande (140) qui exécute une commande pour restreindre au moins une fonction spécifique (F73 ; C73) sur la base d'une information (C70) concernant une heure de consigne (C71) reçue du module de communication (170) lorsqu'une heure actuelle est incluse dans l'heure de consigne (C71),
dans lequel la commande (140) est configurée pour :
exécuter normalement la au moins une fonction spécifique lorsque l'heure actuelle ne fait pas partie de l'heure de consigne et
lorsque la au moins une fonction de mode (C75) est entrée à l'étape d'entrée de mode (S100), activer la au moins une fonction de mode (C75) à l'étape d'interdiction de dérangement (S300) et désactiver la au moins une fonction de mode (C75) à l'étape d'exécution normale (S400).

14. Robot mobile (100) selon la revendication 13, dans lequel la commande (140) est configurée pour exécuter une commande pour interdire la au moins une fonction spécifique (F73 ; C73) uniquement dans la zone définie (C77) parmi des zones de déplacement lorsque l'heure actuelle fait partie de l'heure de consigne (C71), sur la base de l'information (C70) concernant la zone définie (C77) reçue du module de communication (170).
